# EUROPÄISCHE PATENTSCHRIFT

(11) **EP 3 472 660 B1**
(45) Veröffentlichungstag und Bekanntmachung des Hinweises auf die Patenterteilung: **01.04.2020**
(21) Anmeldenummer: 17733758.1
(22) Anmeldetag: 16.06.2017
(51) Int. Cl.: G02C 5/22

(54) **GELENK ALS VERBINDUNGSTEIL ZWISCHEN EINER BRILLENFRONT EINER BRILLE UND IHREN BÜGELN**
JOINT AS CONNECTION PART BETWEEN THE FRONT OF EYEGLASSES AND THE TEMPLES THEREOF
ARTICULATION FAISANT OFFICE D'ÉLÉMENT DE LIAISON ENTRE UNE PARTIE AVANT D'UNE PAIRE DE LUNETTES ET SES BRANCHES

(30) Priorität: 17.06.2016 DE 102016007403
(43) Veröffentlichungstag der Anmeldung: 24.04.2019
(73) Patentinhaber: Mierswa, Aurélien, 81543 München (DE)
(72) Erfinder: Mierswa, Aurélien, 81543 München (DE)
(74) Vertreter: Hamel, Armin
(86) Internationale Anmeldenummer: PCT/EP2017/064737
(87) Internationale Veröffentlichungsnummer: WO 2017/216328

(56) Entgegenhaltungen:
- EP-A1- 1 279 991
- EP-A1- 1 524 547
- DE-C1- 4 339 517
- FR-A1- 2 690 760
- US-A1- 2009 303 431

## Beschreibung

### Technisches Gebiet:

Die Erfindung betrifft ein Gelenk als Verbindungsteil zwischen einer Brillenfront einer Brille und ihren parallel zur Brillenfront einklappbaren und ausklappbaren Bügeln in die Ablage- oder Sehstellung der Brille, gemäß dem Oberbegriff des Anspruchs 1.

### Stand der Technik:

Durch die EP 1279991A1 ist ein schraubenloses Gelenk jeweils als Verbindungsteil zwischen einer Brillenfront, einer Brille und ihren parallel zur Brillenfront ein- und ausklappbaren Bügeln bekannt geworden, bestehend aus je einem vorderen Gelenkteil, der endständig an der Brillenfront angeordnet ist und aus je einem hinteren Gelenkteil, der an den Bügeln an deren vorderen Ende angeordnet ist. Im hinteren Gelenkteil sitzt ein federbelasteter Kugelkopfanker mit einem Kugelkopf, der beweglich-schwenkbar in einem Kugelkopflager des vorderen Gelenkteils sitzt. Der vordere Gelenkteil weist an seinem zum Bügel weisenden Ende eine den vorderen Gelenkteil sowie das Kugelkopflager teilweise durchsetzende, schlitzförmige Aussparung auf, die dergestalt gerichtet und geformt ist, dass sie ein Ein- und Ausklappen der Bügel sowohl in die Ablage- als auch in die Sehstellung der Brille ermöglicht. Eine Abnahme der Bügel vom Frontteil der Brille ist nicht vorgesehen. Durch die DE 43 39 517 C1 ist ein Brillengestell mit Bügeln bekannt geworden, die über ein Gelenk horizontal schwenkbar mit einem glasseitigen Anschlussstück verbunden sind. Das Gelenk besteht aus einem Grundblock und einem Gleitblock, die über einen Schaft miteinander verbunden sind, wobei der Schaft an seinem einen Ende eine Gelenkkugel aufweist, die in einer eine Öffnung für den Schaft aufweisenden gelenkpfannenartigen Ausnehmung des Grundblockes angeordnet ist. Das andere Ende des Schaftes ist unter Zwischenschaltung einer Feder an dem Gleitblock festgelegt; der Schaft ist in der lang-lochförmig ausgebildeten Öffnung horizontal schwenkbar. Die Öffnung weist im Bereich der pfannenartigen Ausnehmung im wesentlichen vertikal ausgerichtete Aussparungen auf, derart, dass sich der Schaft bei Bewegung des Bügels in diese Aussparungen bewegen kann, während der Gleitblock über einen Rand des Grundblocks gegen die Kraft der Feder ausweicht. Der Grundblock weist an seiner Stirnseite eine im wesentlichen V-förmige Ausnehmung auf, der Gleitblock eine im wesentlichen V-förmige Spitze. Am Grundblock ist für den eingeklappten Zustand des Bügels eine Aufnahmemulde angeordnet, deren Form im Wesentlichen der Spitze des Gleitblockes angepasst ist.
Durch die EP 1524547A1 ist ein Federscharnier, insbesondere für einteilige Bügel, bekannt geworden, welches einen Vorsprung umfasst, der mit einer Vorderseite eines Rahmens für eine Brille verbunden werden kann, so dass er aus der Vorderseite des Rahmens herausragt. Der Vorsprung besitzt einen ersten, kugelförmigen Sitz, der mit einem zweiten, zylindrischen Sitz verbunden ist, welcher eine Achse hat, die im Wesentlichen senkrecht zu der Längsachse des Vorsprungs verläuft. Ein Verbindungselement trägt an einem ersten Ende einen kugelförmigen Kopf, der in dem ersten Sitz untergebracht ist und gegen die seitliche Oberfläche des ersten Sitzes anstößt. Das Verbindungselement umfasst einen verlängerten Bereich, der im Wesentlichen stabförmig ist und koaxial elastische Mittel trägt, die in einem elastischen Element bestehen, welches zwischen einem ersten Widerlager angeordnet ist, das an einem Ende des Verbindungselements geformt ist, welches dem Ende gegenüberliegt, das den Kopf trägt, und einem Verriegelungselement, das verschiebbar von dem Verbindungselement getragen wird, und zwar durch den verlängerten Bereich. Ein verlängertes Behälterelement ist mit einem Bügel für einen Rahmen für eine Brille verbunden, wobei innerhalb des Behälterelements ein Hohlraum in Längsrichtung geformt ist, der an einem ersten Ende des Behälterelements offen ist und das Verbindungselement, das Verriegelungselement und das elastische Element zumindest teilweise aufnimmt. Der kugelförmige Kopf kann sich axial in Bezug zum Behälterelement gegen das elastische Element bewegen. Der kugelförmige Kopf ragt vollständig aus dem Hohlraum herausragt, wobei der erste, kugelförmige Sitz über eine erste Führung, die im Verhältnis zur Längsachse des Vorsprungs geneigt ist, mit dem zweiten, zylindrischen Sitz verbunden ist. Der kugelförmige Kopf ist des Weiteren in den zweiten Sitz einsetzbar, von wo er in einer Translationsbewegung innerhalb der geneigten Führung zum ersten, kugelförmigen Sitz hinbewegt werden kann. Das Scharnier umfasst des Weiteren einen Stöpsel, der lösbar in den zweiten Sitz einsetzbar ist, um eine axiale Verschiebung des Kopfs zu verhindern. Eine Abnahme der Bügel vom Frontteil der Brille ist nicht vorgesehen.
Des Weiteren ist durch die US2009/0303431A1 eine Gelenkanordnung für ein elastisches Scharnier für Brillen bekannt geworden, um Bügel an der Front einer Brille zu befestigen. Die Gelenkanordnung umfasst ein Paar von Scharniergliedern, welche aus einer Kugel einerseits innerhalb einer Buchse andererseits gebildet sind. Die Kugel sitzt am Ende einer federbelasteten Achse, welche in der frontseitigen Gelenkanordnung des Scharniers angeordnet ist. Die Buchse sitzt drehbar in einer Führung, welche am Ende des Brillenbügels befestigt ist. Die Buchse ihrerseits weist eine zentrisch in den Bügel ragende, federbelastete Achse auf, so dass bei seitlicher Bewegung der Bügel die Buchse mitsamt der in ihr sitzenden Kugel in Richtung der Bügel bewegt werden kann. Auf diese Weise können die Bügel ohne Zerstörung des Scharniers um einen kleinen Winkel nach außen bewegt werden; jedoch ist auch hier eine Abnahme der Bügel vom Frontteil der Brille nicht vorgesehen.
Durch die FR 2690760 A1 ist ein federelastisches Scharnier ohne sichtbare Schraube bekannt geworden, welches im Wesentlichen aus zwei Teilen besteht. Im ersten Teil sitzt eine verschieblich gegen die Kraft einer Feder angeordnete Stange, die an ihrem Ende eine Kugel aufweist, die aus diesem Teil herausragt; stirnseitig weist dieses erste Teil eine dreiecks- oder keilförmige Aussparung auf. In diese Aussparung passt das Ende des gegenüber liegenden zweiten Teils, welches einen Schlitz der lichten Weite des Durchmessers der Stange besitzt. Dieser Schlitz besitzt an seinem dem ersten Teil abgewandten Ende eine Sackbohrung, in die die im ersten Teil angeordnete Kugel einzugleiten imstande ist. Das zweite Teil weist des Weiteren eine teilquadratische Gestaltung auf, so dass entweder die eine Ecke des zweiten Teils in die dreiecks- oder keilförmige Aussparung des ersten Teils zu liegen kommt, wobei in diesem Fall beide Scharnierteile eine gemeinsame Achse haben. Bei einer Bewegung der beiden Teile relativ zueinander wird die andere Ecke des zweiten Teils von der dreiecks- oder keilförmige Aussparung aufgenommen, die Stange ragt nunmehr durch den Schlitz; die Achsen der beiden Teile stehen senkrecht aufeinander. In beiden Fällen verbleibt die Kugel innerhalb der Sackbohrung des zweiten Teils. In ihrer Endlage innerhalb der dreiecks- oder keilförmige Aussparung des ersten Teils markieren die beiden Ecken des zweiten Teils jeweils die Endlage der relativen Bewegung der beiden Teile zueinander. Auch hier ist allerdings eine Abnahme der Bügel vom Frontteil der Brille nicht vorgesehen.

### Technische Aufgabe:

Der Erfindung liegt die Aufgabe zugrunde, ein schraubenloses Gelenk bzw. Scharnier für eine Brille zu schaffen, das das Abnehmen und Wechseln der Bügel von der Brillenfront gestattet, um die Bügel beliebig austauschen oder ersetzen zu können, sei es weil einer oder beide Bügel defekt ist/sind oder weil die Bügel gegen solche mit einem anderen Design getauscht werden sollen oder sei es um Sportbügel oder sonstige Bügel - wie Modebügel - an der Brillenfront anzubringen; ebenso liegt der Erfindung die Aufgabe zugrunde, ein schraubenloses Gelenk bzw. Scharnier für eine Brille zu schaffen, welches einen hohen Überlastungsschutz der Bügel nach außen-also über die Sehstellung der Brille hinaus - haben soll, ohne dass dabei die Bügel oder ihre Ansatzstellen an der Brillenfront Schaden leiden.

### Lösung der Aufgabe:

Bei einem schraubenloses Gelenk, insbesondere als Verbindungsteil zwischen einer Brillenfront einer Brille und ihren mehr oder weniger parallel zur Brillenfront einklappbaren und ausklappbaren Bügeln, Ablage- und Sehstellung der Brille, bestehend aus einem vorderen Gelenkteil, welche jeweils endständig an der Brillenfront angeordnet sind und aus einem hinteren Gelenkteil, der jeweils an den Bügeln an deren vorderen Ende angeordnet ist, wobei im hinteren Gelenkteil ein elastischer oder federbelasteter Kugelkopfanker mit einem Kugelkopf angeordnet ist, der in einem Kugelkopflager des vorderen Gelenkteils beweglich sitzt, welches an seinem zum Bügel weisenden Ende eine den vorderen Gelenkteil sowie das Kugelkopflager wenigstens teilweise durchsetzende, schlitzförmige Aussparung aufweist, die in Richtung zur Symmetrieebene der Brille hin geöffnet ist, wobei die Aussparung auch in Richtung der Längsachse des vorderen Gelenkteils zum Bügel hin geöffnet ist, um dergestalt ein Ein- und Ausklappen der Bügel um 90 Grad von der Ablage- in die Sehstellung der Brille und umgekehrt zu ermöglichen, besteht die Lösung erfindungsgemäß darin,
a) dass der Durchmesser des Kugelkopflagers des vorderen Gelenkteils größer ist als die lichte Höhe der Aussparung, so dass das Kugelkopflager die Aussparung hinter-schneidet
b) dass der Kugelkopf des Kugelkopfankers zwei sich gegenüberliegende Abplattungen mit einem gegebenen Abstand voneinander aufweist, und die lichte Höhe der Aussparung an ihrem zur Brillenfront hin gerichteten Ende größer als der Abstand der Abplattungen voneinander ist
c) dass der Kugelkopf des Kugelkopfankers nur mit seinen Abplattungen die lichte Höhe der Aussparung zu passieren imstande ist, hingegen nur der volle Durchmesser des Kugelkopfes bei Drehung des Kugelkopfankers um 90 Grad um seine Längsachse in das Kugelkopflager passend einzugreifen imstande ist, um dort passend zu sitzen, so dass nach Einführen des Kugelkopfes mit dessen Abplattungen in die Aussparung die Bügel relativ zur Brillenfront um die Längsachse des Kugelkopfankers um wenigstens 90 Grad drehbar sind und dabei der Kugelkopf desselben im Kugelkopflager, die Aussparung hinterschneidend, zu liegen kommt und somit die Bügel in umgekehrter Reihenfolge der Bewegung vom vorderen Gelenkteil der Brillenfront abnehmbar sind.

Der Vorteil der Erfindung besteht darin, dass die Bügel von der Bügelfront ohne Lösen von Schrauben und zerstörungsfrei abgenommen werden können, um entweder gegen neue, ähnliche Bügel oder gegen solche mit einem anderen Design ausgetauscht zu werden. Dieser Vorteil ist insbesondere bei Brillen für Kinder gegeben, bei denen relativ häufig die Bügel einer Brille oder auch die Front durch ungewollte Krafteinwirkung kaputtgehen.

In weiterer Ausgestaltung der Erfindung können sowohl das Kugelkopflager als auch die Aussparung beidseitig sowie in Richtung zum hinteren Gelenkteil um 180 Grad geöffnet sein, nämlich beginnend in Richtung zur Symmetrieebene der Brille, danach in Richtung hin zum hinteren Gelenkteil, 90 Grad, und danach von der Symmetrieebene der Brille wegweisend, 180 Grad, um auf diese Weise ein Verschwenken der Bügel um wenigstens 180 Grad zu ermöglichen, so dass nach Schwenken des jeweiligen Bügels um 180 Grad und Drehung desselben um 90 Grad um seine Längsachse ein Einführen oder Herausnehmen des Kugelkopfes mit dessen Abplattungen seitlich in das Kugelkopflager hinein oder aus diesem heraus gegeben ist. Dadurch können die Bügel aus der Sehstellung heraus weiter, weg von der Symmetrieachse der Brille, geschwenkt werden, ohne dass dadurch die Bügel oder die Brille Schaden nehmen, und die Bügel können in dieser Stellung von der Brillenfront abgenommen werden.

In weiterer Ausgestaltung des erfindungsgemäßen Gelenks ist der Kugelkopfanker eigenelastisch, vorzugsweise federelastisch mittels einer Druck- oder Zugfeder, verdrehsicher im hinteren Gelenkteil gehaltert. Die Verdrehsicherheit des Kugelkopfankers bewirkt, dass derselbe und mit ihm natürlich der Bügel sicher und ohne Zerstörung aus dem Kugelkopflager sowie der Aussparung herausgenommen werden kann.

In weiterer Ausgestaltung des erfindungsgemäßen Gelenks weisen beide Gelenkteile an ihren einander zugewandten Enden eine durch die Aussparung geteilte Platte bzw. eine Gegenplatte auf, wobei die Platte des vorderen Gelenkteils auf jeder Seite der Aussparung je eine Gleitfläche und die Gegenplatte des hinteren Gelenkteils seitlich ebenfalls je eine Gegengleitfläche besitzt und Gleitflächen und Gegengleitflächen sich gegenüberstehen. Diese Gestaltung der Platte und der Gegenplatte mit Gleitflächen bzw. Gegengleitflächen bewirken ein Abrollen der beiden Gelenkteile aufeinander beim Einklappen oder Ausklappen der Bügel oder bei der Abnahme derselben von der Brillenfront.

In weiterer Ausgestaltung des erfindungsgemäßen Gelenks weisen die Gleitflächen der Platte einen dieselbe überragenden Bord auf, welcher aus zwei sich gegenüberliegend, bevorzugt wenigstens teilweise parallel zueinander verlaufenden Kufen gebildet ist, welche zumindest teilweise um die Aussparung herumlaufen und zumindest teilweise deren Rand ausbildet. Durch diesen Bord werden die beiden Gelenkteile aufeinander verrutschungs- und verdrehungssicher aufeinander geführt, so dass beim Einklappen oder Ausklappen der Bügel dieselben immer sicher ihre vorbestimmte Position einnehmen und keine Nachjustierung der gegenseitigen Stellung der Bügel zur Brillenfront notwendig ist.

In weiterer Ausgestaltung des erfindungsgemäßen Gelenks und zur Sicherstellung der Positionierung der gegenseitigen Stellung des Bügels zur Brillenfront ist von den Gegengleitflächen des hinteren Gelenkteils mittig eine rechteckige Fläche eingeschlossen, welche um die Höhe der Zweige des Bords gegenüber den Gegengleitflächen der Platte des hinteren Gelenkteils tiefer gelegt ist, wodurch zwischen der Fläche und den Gegengleitflächen der Platte Begrenzungswandungen Q-R und U-V hin zu den Gegengleitflächen gebildet sind, die parallel zu den im Bereich der Gleitflächen der Platte verlaufenden Kufen gerichtet sind. Dadurch wird die verdrehsichere Stabilität der Bügel in deren Sehstellung bezüglich der Brillenfront erzielt.

In weiterer Ausgestaltung des erfindungsgemäßen Gelenks weisen die Kufen des Bords an ihrem der Symmetrieebene der Brille abgewandten Ende je einen Höcker auf, die in vorteilhaft bewirken, dass beim Verschwenken des Bügels in die Richtung weg von der Symmetrieebene der Brille ein Widerstand überwunden werden muss, der größer ist als derjenige beim Einklappen der Bügel in die Ablagestellung oder Ausklappen derselben in die Sehstellung der Brille. Der Grund ist, dass die Höcker den größten Abstand des Mittelpunktes des Kugelkopfes bzw. des Kugelkopflagers vom jeweiligen Gleit-Drehpunkt beim Verschwenken des Bügels darstellen.

In weiterer Ausgestaltung des erfindungsgemäßen Gelenks sind das Kugelkopflager innerhalb des vorderen Gelenkteils, wie auch die Führung des Kugelkopfankers innerhalb des hinteren Gelenkteils außermittig versetzt bezüglich der gemeinsamen Mittenachse, und zwar in Richtung weg von der Symmetrieebene der Brille. Dadurch wird vorteilhaft bewirkt, dass in der 180 Grad-Endstellung des Bügels bezüglich der Brillenfront der Bügel ohne Vorspannung des Kugelkopfankers von der Brillenfront abgenommen und wieder ohne Vorspannung angefügt werden kann.

In weiterer Gestaltung des erfindungsgemäßen Gelenks weist der Kugelkopfanker zur Bewerkstelligung seiner Verdrehsicherheit innerhalb des hinteren Gelenkteils einen Abschnitt auf, der einen nichtrunden Querschnitt besitzt, wobei der Kugelkopfanker mit diesem Abschnitt in der Führung, die ein nichtrundes Loch ist, passend beweglich gehaltert ist, welches Loch das hintere Gelenkteil wenigstens teilweise längs parallel zu dessen Längsachse durchsetzt. Der die Verdrehsicherheit bewirkende Abschnitt des Kugelkopfankers ist bevorzugt direkt nach dem Kugelkopf angeordnet und weist als größten Durchmesser vorzugsweise denjenigen der sich gegenüberliegenden abgeplatteten Flächen des Kugelkopfes auf.

In weiterer Ausgestaltung des erfindungsgemäßen Gelenks weist die Aussparung innerhalb des vorderen Gelenkteils in Richtung zum hinteren Gelenkteil gerichtet flächig-V-förmig nach oben und nach unten sich öffnende Flächen auf, wodurch eine Schwenk-bewegung der Bügel in der Sehstellung der Brille, um den Kugelkopf des Kugelkopfankers innerhalb des Kugelkopflagers als Drehpunkt, gegeben ist.

Kurzbezeichnung der Zeichnung, in der zeigen:
- Figur 1: eine perspektivische Ansicht einer Brille mit je einem erfindungsgemäßen Bügelgelenk in jedem der beiden Bügel zum Umklappen derselben, nämlich je ein vorderes Gelenkteil des Bügelgelenks innerhalb des Frontbügelabschnitts oder der Brillenfront und je ein hinteres Gelenkteil des Bügelgelenks innerhalb des Bügels
- Figur 2: eine vergrößerte, perspektivische Ansicht der beiden Gelenkteile des Gelenks gemäß Figur 1 sowohl im Frontbügelabschnitt oder in der Brillenfront als auch innerhalb des Bügels
- Figur 3a, 3b: je eine perspektivische, vergrößerte Ansicht des vorderen Gelenkteils sowie des hinteren Gelenkteils des Bügelgelenks gemäß der Figur 2
- Figur 4a-e: eine vergrößerte, perspektivische Explosionsansicht der Einzelteile des Bügel-gelenks der Figuren 2 und 3, nämlich sowohl der vordere Gelenkteil, als auch der hintere Gelenkteil, mit einem darin enthaltenen Kugelkopfanker, einer Feder und einer die Feder aufnehmende Hülse
- Figur 5: eine perspektivische, vergrößerte Ansicht des vorderen Gelenkteils des Bügelgelenks, wobei der Gelenkteil um 180 Grad in der Zeichenebene gegenüber der Darstellung in Figur 3a geklappt ist
- Figur 6: eine perspektivische, vergrößerte Ansicht des hinteren Gelenkteils, der zum einen ebenfalls um 180 Grad in der Zeichenebene gegenüber der Darstellung in Figur 3a geklappt ist und zum anderen der Kugelkopfanker der Figur 3b weggelassen ist
- Figur 7: eine perspektivische, vergrößerte Ansicht des Kugelkopfankers
- Figur 8a: einen Mittenschnitt durch das gesamte Gelenk im ausgeklappten Zustand des Klappbügels, wie in Figur 1 gezeigt, zusammen mit den Bewegungskreisen r1 und r2 des Bügels beim Umklappen
- Figur 8b: einen Mittenschnitt durch das gesamte Gelenk im ausgeklappten Zustand des Klappbügels, wobei die Schnittebene gegenüber derjenigen in Figur 8a um 90 Grad nach unten geklappt ist
- Figur 9a-g: verschiedene Stellungen des Gelenks vom eingeklappten Zustand a parallel zum Frontteil der Brille (Ablagestellung der Brille) über einen Zwischenschritt b zum ausgeklappten Zustand c, gemäß Figur 1, und über einen Zwischenschritt d beim Schwenken des Bügels zum entgegengesetzten, umgeklappten Zustand e des Bügels, wonach derselbe nach einer 90 Grad-Drehung um seine Längsachse f von der Brillenfront abgenommen werden kann

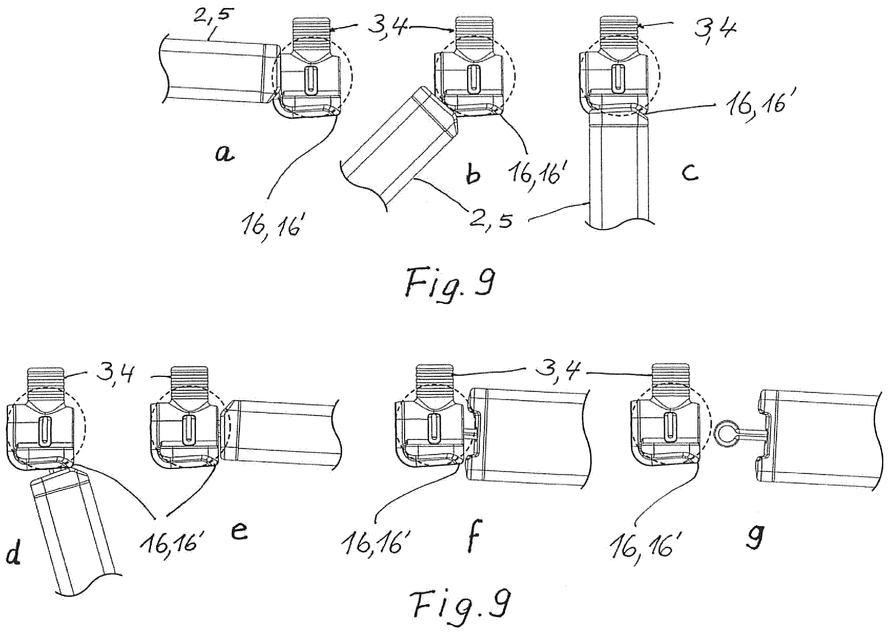

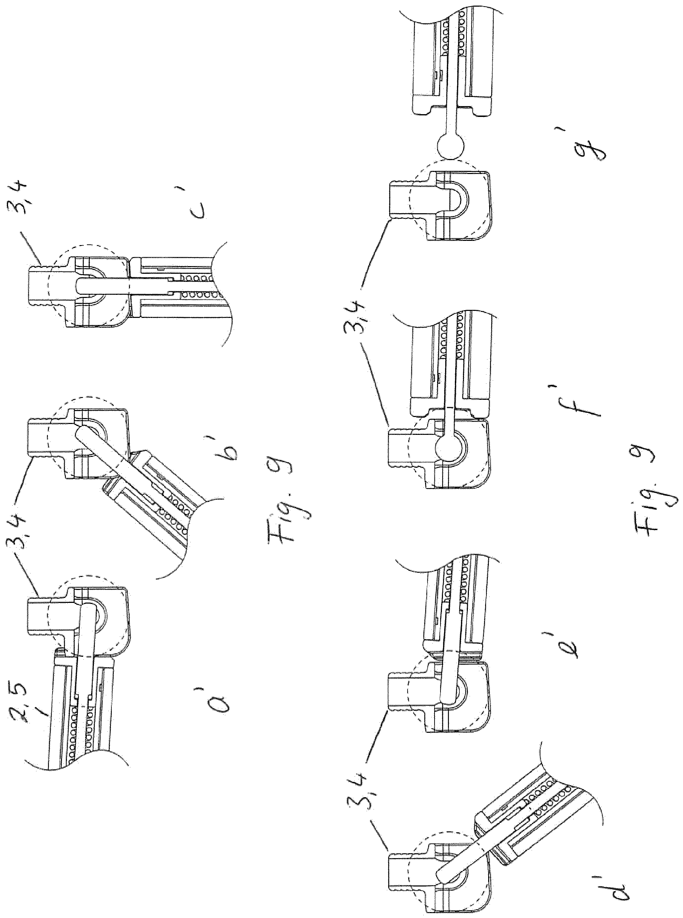

- Figur 9a'-g': die Stellungen des Gelenks gemäß der Figuren 9a bis g, wobei beide Gelenkteile in einem Mittenschnitt gezeigt sind

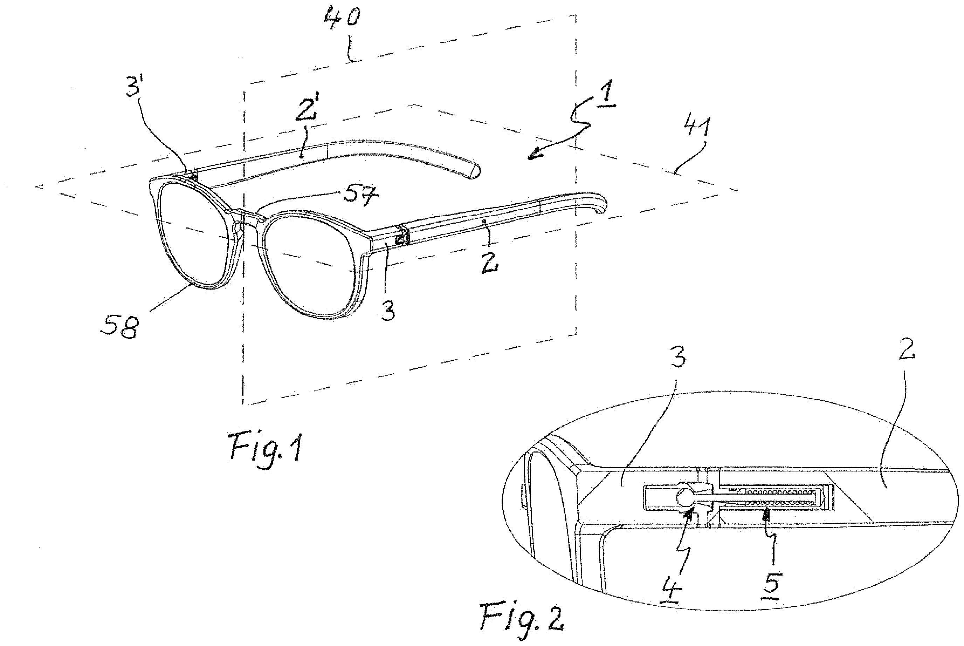

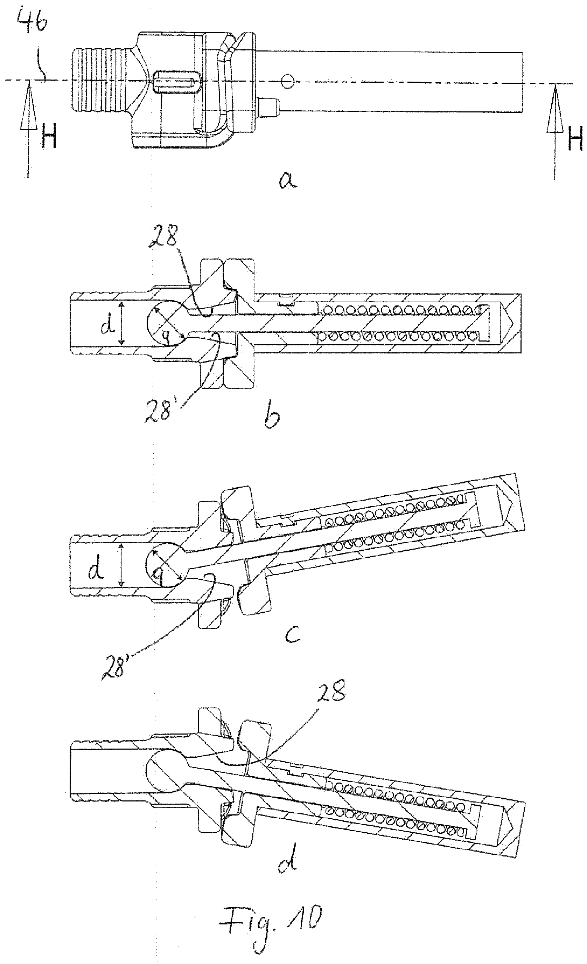

- Figur 10a-d: eine Ansicht des Gelenks im normalen, ausgeklappten Zustand a des Bügels (wie in Figur 1), Figur 10b einen Schnitt längs der Linie H-H in Figur 10a, wobei einerseits in Figur 10c gezeigt ist, dass der Bügel und somit der hintere Gelenkteil zum Schutz desselben gegen ein zu starkes Verbiegen aus der Bügelebene heraus etwas nach oben gebogen bzw. verschoben werden und anderer-seits in Figur 10d der Bügel und somit der hintere Gelenkteil ebenfalls zum Schutz desselben gegen ein zu starkes Verbiegen aus der Bügelebene heraus etwas nach unten gebogen bzw. verschoben werden kann

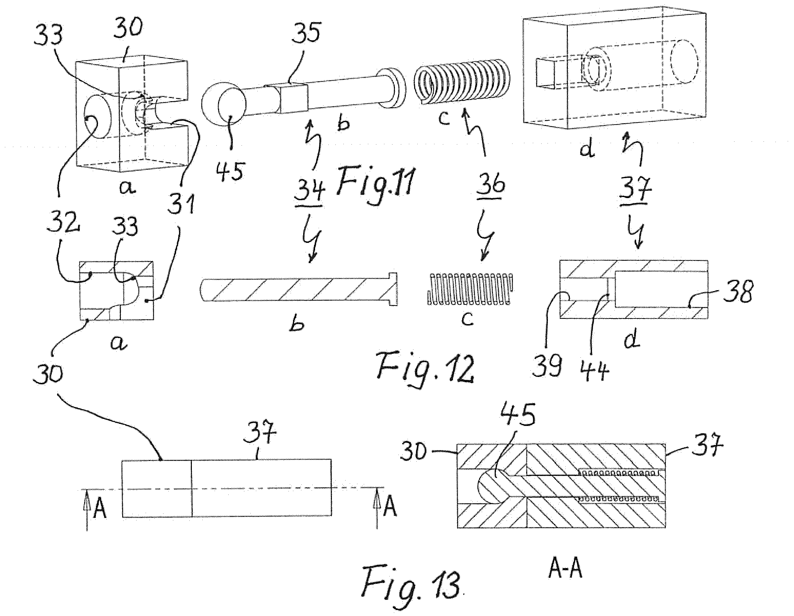

- Figur 11-13: perspektivische Ansichten und Mittenschnitte einer gegenüber den vorhergehenden Figuren vereinfachten Ausgestaltung zweier Gelenkteile eines vereinfacht ausgestalteten Bügelgelenks

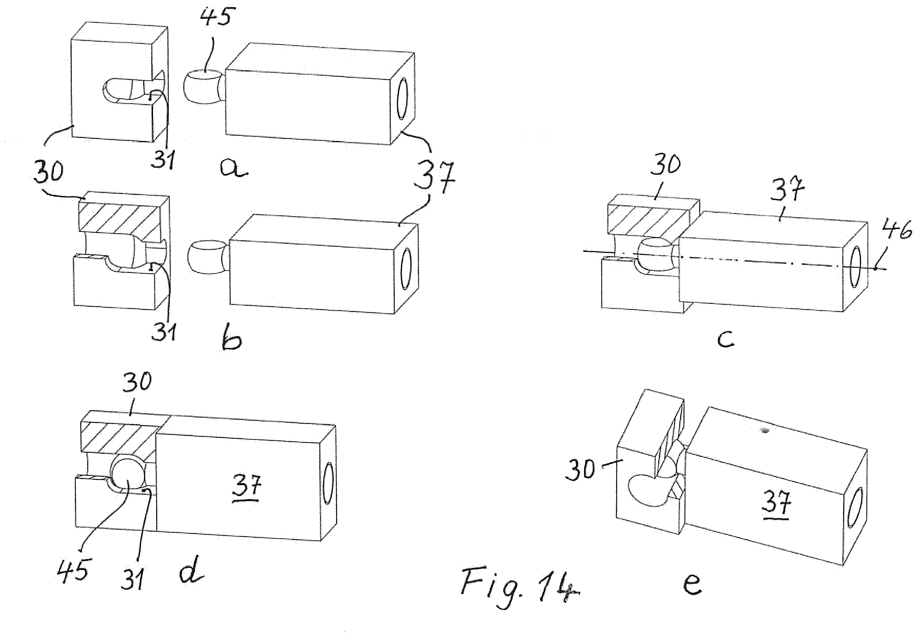

- Figur 14a-e: perspektivische Ansichten der Ausgestaltung zweier Gelenkteile des vereinfachten Gelenks gemäß der Figuren 11 bis 13, wobei die Figuren 14a, b und c das Zusammenführen der beiden Gelenkteile zeigen, Figur 14d den um 90 Grad um die Längsachse gedrehten Zustand der beiden Gelenkteile gegenüber Figur 14c, und Figur 14e den um 90 Grad geklappten Zustand der beiden Gelenkteile in die Ablagestellung der Brille

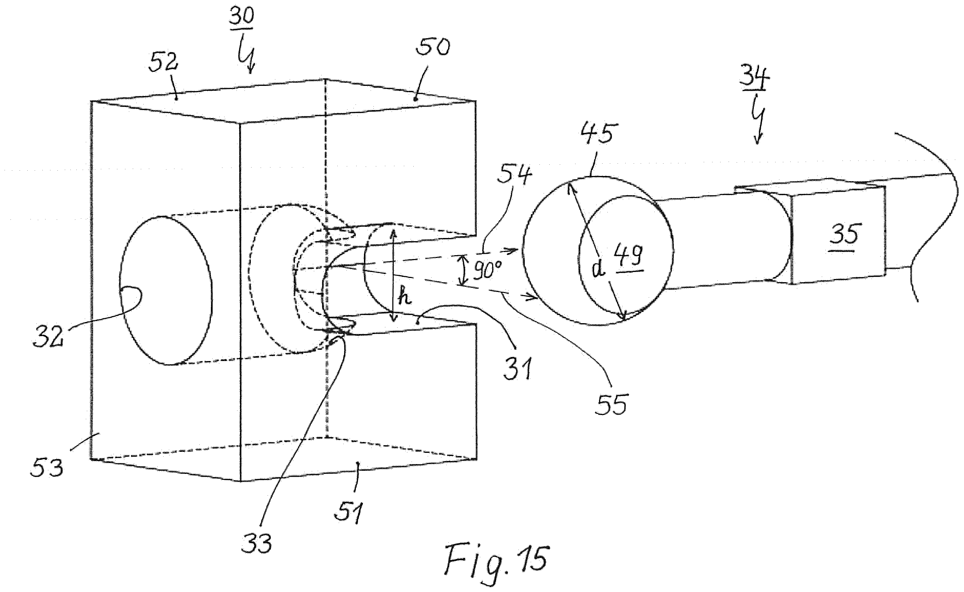

- Figur 15: eine vergrößerte Darstellung des vorderen Gelenkteils des Gelenks der vereinfachten Ausführung mit Kugelkopfanker gemäß der Figur 11

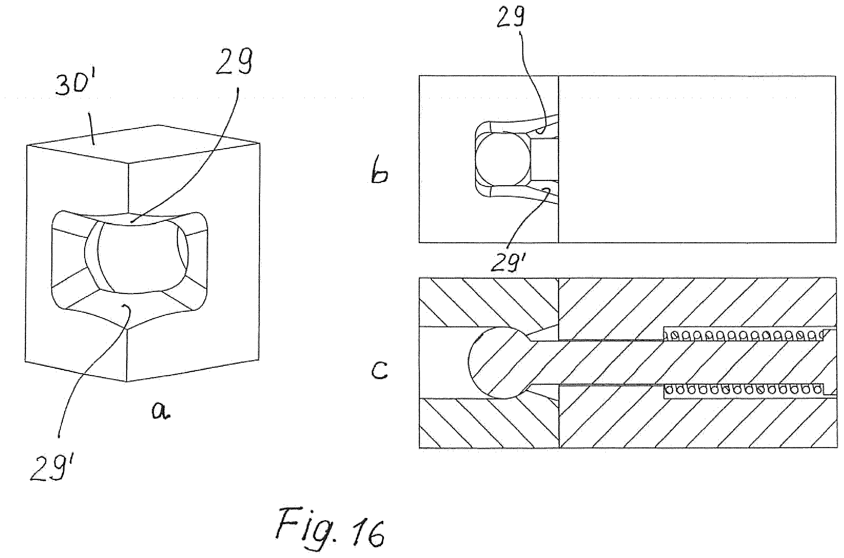

- Figur 16a: eine vereinfachte Darstellung des vorderen Gelenkteils mit V-förmiger Aussparung, damit der Bügel, wie in Figur 10, nach oben und unten verschwenkbar ist und
- Figur 16b-c: je eine weitere Darstellung der Figur 15, nämlich beide Gelenkteile in einer Ansicht b, und einem Schnitt c.

Technische Beispiele von bevorzugten Ausführungsformen der Erfindung: Figuren 1 und 2 zeigen je eine perspektivische Ansicht einer Brille 1 mit erfindungsgemäßen Bügelgelenken 4, 5, welche gemäß der Schnittansicht in Figur 2 in jedem der beiden Bügel 2, 2' zum Umklappen derselben (Klappbügel) vorhanden sind, nämlich je ein vorderes Gelenkteil 4 des Bügelgelenks innerhalb eines Frontbügelabschnitts 3, 3' der Brille 1, oder allgemein beidseitig-endständig innerhalb der Brillenfront, und je ein hinteres Gelenkteil 5 des Bügelgelenks innerhalb des Bügels 2, 2'. Ebenso ist in Figur 1 die (einzige) Symmetrie- oder Sagittalebene 40 der Brille 1 gezeigt, welche parallel zu den beiden Bügeln 2, 2' durch den Nasensitz 57 der Brille 1 verläuft, wie auch die zur Symmetrieebene 40 um 90 Grad gedreht verlaufende Ebene 41, welche durch die Bügel 2, 2' aufgespannt ist. Figur 2 zeigt eine vergrößerte Ansicht der Gelenkteile 4, 5 des Gelenks der Figur 1, angeordnet einerseits im Frontbügelabschnitt 3 oder in der Brillenfront und andererseits innerhalb des Bügels 2.

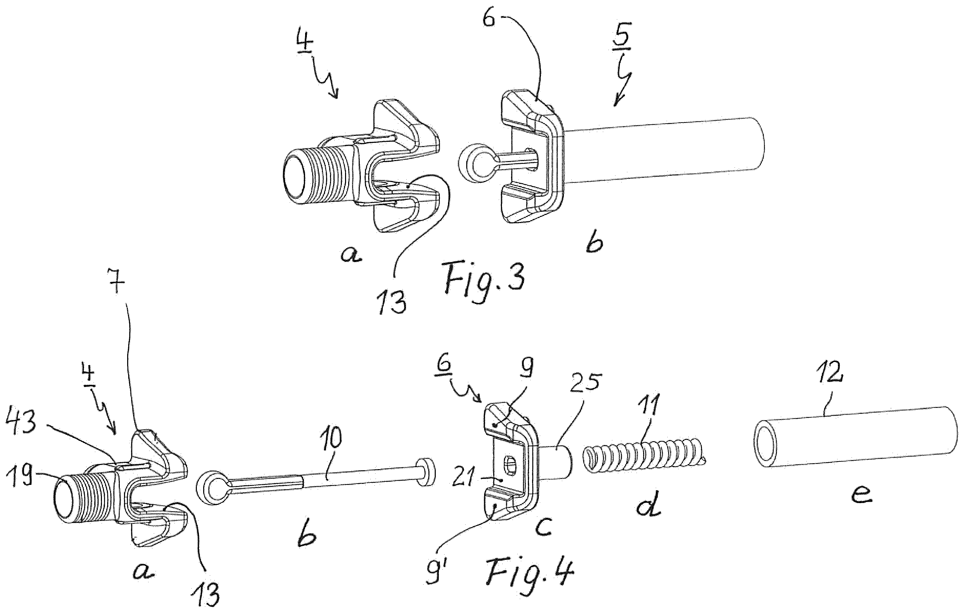

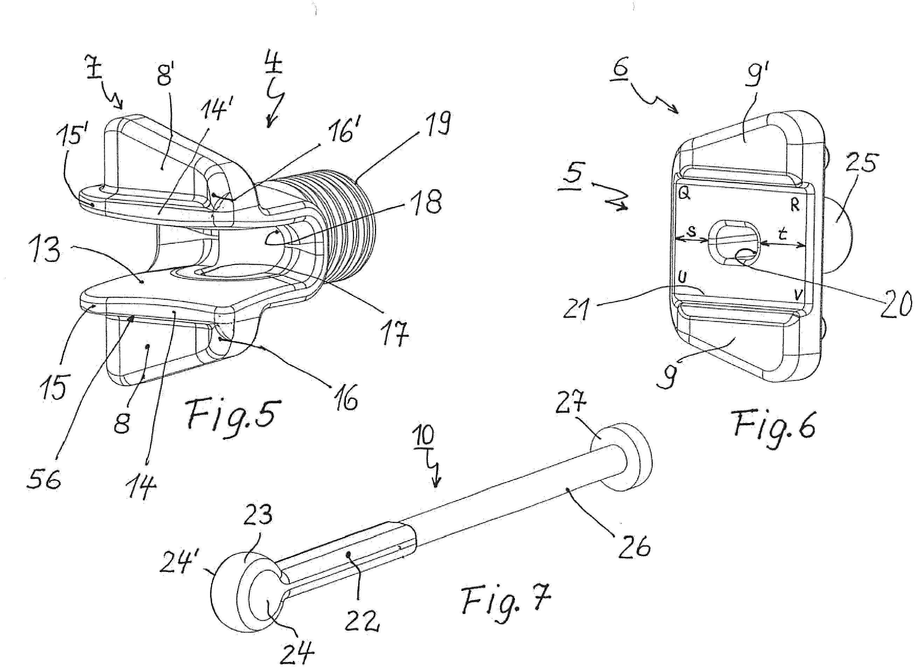

Die Figuren 3 bis 7 zeigen die wesentlichen Einzelteile, aus denen sich die Bügelgelenke 4, 5 zusammensetzen, welche vorzugsweise aus einem metallischen Werkstoff bestehen. Der vordere Gelenkteil 4 weist einen zylindrisch geformten Endabschnitt 19 (Figuren 4a, 5) auf, an den sich ein Halsabschnitt 43 (Figur 4a) anschließt, auf den eine Platte 7 (Figuren 4a, 5) aufgesetzt ist. Endabschnitt 19 und Halsabschnitt 43 sitzen gewöhnlich innerhalb des Frontbügelabschnitts 3, 3', auf dem die Platte 7 aufsitzt oder endständig innerhalb der Brillenfront. Der Halsabschnitt 43 sowie die Platte 7 weisen eine zum Bügel 2, 2' hin geöffnete, schlitzförmige Aussparung 13 auf (Figur 3, 4a, 5), wie es am besten der Figur 5 zu entnehmen ist.

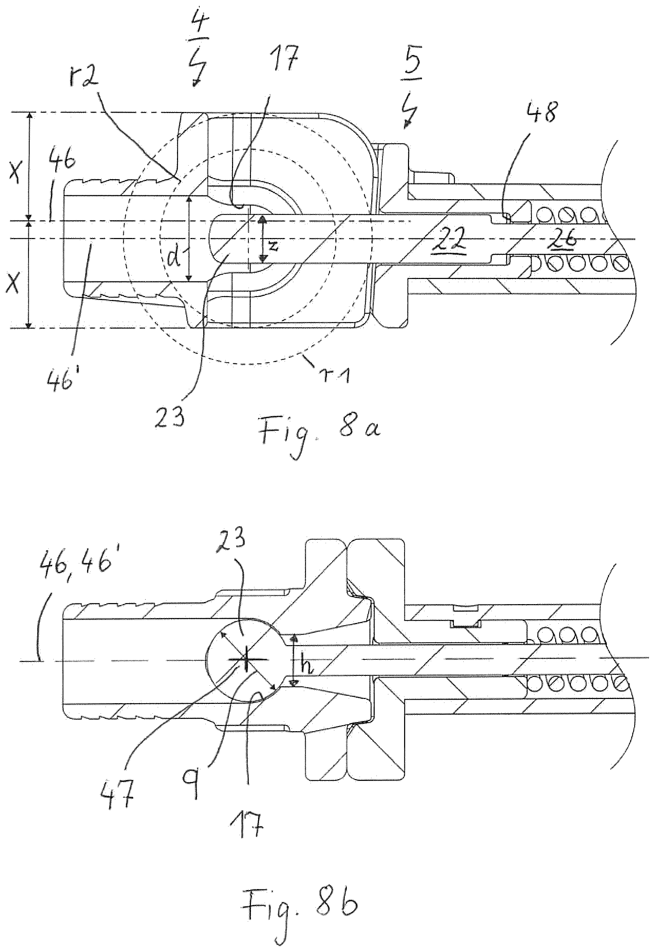

Der hintere Gelenkteil 5 besteht aus einer der Platte 7 gegenüberstehenden Gegenplatte 6, welche endständig je eine Gleitfläche 9, 9' aufweist. Auf der Rückseite der Platte 6 ist ein zylindrisch-hülsenförmiger Aufnahmeabschnitt 25 (Figuren 4c, 6) aufgesetzt, in den eine Feder 11 (Figur 4d) eintaucht, die eine Druck- oder Zugfeder sein kann. Über die Feder 11 und den Aufnahmeabschnitt 25 ist eine Abdeckhülse 12 geschoben (Figur 3), die auf dem Aufnahmeabschnitt 25 festsitzend montiert ist. Die Abdeckhülse 12 sitzt gewöhnlich innerhalb des Endes des Bügels 2, 2' (Figur 2), auf dem die Gegenplatte 6 aufsitzt. Die Gegenplatte 6 besitzt ein Durchgangsloch 20 hin zum Aufnahmeabschnitt 25 und stellt eine Führung für einen innerhalb des Durchgangsloches 20 beweglich angeordnet Kugelkopfanker 10 dar, der an seinem vorderen Ende einen Kugelkopf 23 mit sich gegenüberliegenden Abplattungen 24, 24' aufweist. An den Kugelkopf 23 schließt sich ein Abschnitt 22 des Kugelkopfankers 10 an, wobei dieser Abschnitt 22 einen nichtrunden Querschnitt besitzen kann. Auf den Abschnitt 22 folgt ein Achsabschnitt 26 (Figur 8a) mit gewöhnlich rundem Querschnitt, auf den die Feder 11 aufgeschoben ist. Am Ende des Achsabschnitts 26 ist ein Gegenhalter 27 zur Halterung der Feder 11 fest aufgesetzt. Wie Figur 7 zu entnehmen ist können sich die Abplattungen 24, 24' des Kugelkopfes 23 auf dem Abschnitt 22 mit nichtrundem Querschnitt fortsetzen, dergestalt, dass der Durchmesser der Abplattungen 24, 24' gleich dem Durchmesser des Abschnitts 22 mit nichtrundem Querschnitt des Kugelkopfankers 10 ist, was Figur 8a zu entnehmen ist. Das von den Frontbügelabschnitten 3, 3' wegweisende Ende des Abschnitts 22 mit nichtrundem Querschnitt des Kugelkopfankers 10 bildet gleichzeitig am Ende der Führung des Durchgangslochs 20 mit nichtrundem Querschnitt einen Anschlag 48 aus, wie es Figur 8a zeigt.

Gemäß der Figuren 5 und 6 weisen beide Gelenkteile 4, 5 an ihren einander zugewandten Enden eine Platte 7 (Figur 5) bzw. eine zugeordnete Gegenplatte 6 (Figur 6) auf. Die Platte 7 des vorderen Gelenkteils 4 wird durch die Aussparung 13 geteilt, wodurch auf jeder Seite der Aussparung 13 je eine Gleitfläche 8, 8' der Platte 7 entsteht. Die Gegenplatte 6 des hinteren Gelenkteils 5 besitzt ebenfalls endständig je eine Gegengleitfläche 9, 9', wobei sich Gleitflächen 8, 8' und Gegengleitflächen 9, 9' gegenüberstehen.

Gemäß Figur 6 schließen die Gleitflächen 9, 9' der Gegenplatte 6 des hinteren Gelenkteils 5 teilweise eine Fläche 21 ein, aufgespannt durch deren Ecken Q, R, U, V. Durch die Fläche 21 ist außermittig der Fläche das Durchgangsloch 20 geführt, welches einen nichtrunden Querschnitt aufweist. Der Abstand s des Durchgangslochs 20 zum Rand Q-U der Fläche 21 ist kleiner als der Abstand t des Durchgangsloches 20 vom Rand R-V der Fläche 21, s < t. Der nichtrunde Querschnitt des Durchgangsloches 20 ist so geformt, dass der Kugelkopfanker 10 mit dem nichtrunden Querschnitt seines Abschnitts 22 darin verdrehsicher gleiten kann. Die Verdrehsicherheit des Kugelkopfankers innerhalb der Führung kann auch anders bewerkstelligt werden, zum Beispiel mit dem Nut-und-Feder-Prinzip.

Gemäß der Figuren 5 und 8b schließt sich in weiterer Gestaltung des vorderen Gelenkteils 4 an die Aussparung 13, in Richtung der Brillenfront 58, ein Kugelkopflager bzw. -sitz 17 (Figur 5) mit einem Durchmesser d (Fig. 10) an, an welches Lager 17 sich in Richtung hin zur Brillenfront 58 und parallel zur Längsachse 46 (Figuren 8a, b) der Gelenkteile 4, 5, ein Loch 18 erstrecken kann. Kugelkopflager 17 wie Aussparung 13 sind um 180 Grad schlitzförmig geöffnet, nämlich beginnend in Richtung hin zur Symmetrieebene 40 der Brille 1, danach im Schwenkwinkel in Richtung hin zum hinteren Gelenkteil 5 (Figuren 2, 8b), 90 Grad ergebend, und danach von der Symmetrieebene 40 der Brille 1 wegweisend, 180 Grad ergebend. Der Kugelkopfsitz 17 schneidet die Aussparung 13 an ihrem zur Brillenfront 58 hin gerichteten Ende teilweise an und bildet eine Hinterschneidung, wie es aus den Figuren 5 und 8b zu entnehmen ist. Die Durchlasshöhe h der Aussparung 13 ist an ihrem zum Kugelkopfsitz 17 hinweisenden Ende geringer als der Durchmesser d des Kugelkopfsitzes 17, h < d (Figur 8 a und b). Wesentlich ist, dass auch das Kugelkopflager 17 - gleichermaßen wie das Durchgangsloch 20 der Gegenplatte 6 - weg von der Symmetrieebene 40 nach außen versetzt ist, so dass die Längsachse 46' des im Durchgangsloch 20 gleitenden Kugelkopfankers 10 durch den Mittelpunkt 47 des Kugelkopflagers 17 verläuft. Der Kugelkopf 23 des Kugelkopfankers 10 besitzt eine Durchmesser q, welcher fast den gleichen Durchmesser d besitzt wie der Kugelkopfsitzes 17, der Kugelkopf 23 des Kugelkopfankers 10 sitzt somit passend im Kugelkopfsitz 17.

In weiterer Ausgestaltung des vorderen Gelenkteils 4 weisen gemäß Figur 5 die Gleitflächen 8, 8' der Platte 7 einen dieselbe überragenden Bord 56 als Randbegrenzung der Aussparung 13 auf, wobei der Bord 56 aus zwei sich gegenüberliegend zumindest teilweise parallel zueinander verlaufenden Kufen 14, 14' besteht, welche zumindest teilweise in Rundungen 15, 15' um die Aussparung 13 herumlaufen und zumindest teilweise deren Rand ausbilden, nämlich um den zur Gegenplatte 6 hin gerichteten sowie zur Symmetrieebene 40 der Brille 1 (Figur 1) hin gerichteten Rand der Aussparung 13. Die beiden Kufen 14, 14' können sich am Ende der Aussparung 13, diese umrundend, vereinigen.
Der vordere Gelenkteil 4 weist eine weitere, wesentliche Gestaltung auf. Zum einen besitzen die Kufen 14, 14' an ihrem der Symmetrieebene 40 der Brille 1 abgewandten Ende je einen Höcker 16, 16' wie es den Figuren 5 und 9a bis g zu entnehmen ist. Zum anderen ist der Kugelkopfsitz 17 nicht zentrisch am Ende der Aussparung 13, gerichtet hin zur Brillenfront 58, angeordnet, sondern exzentrisch in der Bügelebene 41, weg von der Symmetrieebene 40 der Brille, verschoben. Wie vorbeschrieben ist das den Kugelkopfanker 10 aufnehmende Loch 20 innerhalb der Fläche 21 gleichermaßen exzentrisch angeordnet.

Gemäß Figur 6 ist die von den Gegengleitflächen 9, 9' des hinteren Gelenkteils 5 mittig eingeschlossene, rechteckige Fläche 21, die eben ausgeführt sein kann, um die Höhe der Zweige 14, 14' des Bords 56 tiefer gelegt, wodurch zwischen der Fläche 21 und den Gegen-gleitflächen 9, 9' der Platte 6 Begrenzungswandungen Q-R und U-V hin zu den Gegengleitflächen 9, 9' gebildet sind, die bei in die Sehstellung ausgeklappten Bügeln 2, 2' der Brille 1 parallel zu den Kufen 14, 14' der Platte 7 gerichtet sind. Die Kufen 14, 14' der Platte 7 berühren seitlich die Begrenzungswandungen Q-R und U-V der Fläche 21 und stehen auf derselben, wodurch die Bügel 2, 2' auf der Fläche 21 geführt werden und die Bügel 2, 2' verdrehsicher auf derselben unter Spannung der Feder 11 stehen. Da die Kufen 14 und 14' um die Aussparung 13 herumlaufen, befinden sich die Kufen 14, 14' auch auf der Innenseite des vorderen Gelenkteils 4, also auch auf der Innenseite welche der Symmetrieebene zugewandt ist. Somit besteht die Verdrehsicherung der Bügel auch in der Ablagestellung der Brille.

Die Figuren 9a - g und 9a' - g' dienen der Erläuterung der Funktionsweise der zuvor beschriebenen Gelenkteile 4, 5, wobei die Figuren jeweils identische Stellungen zeigen. Die Figuren 9a' bis 9g' zeigen darüber hinaus zusätzlich beide Gelenkteile 4, 5 bzw. Bügel 2 in einem Mittenschnitt.

In Figur 9a ist der hintere Gelenkteil 5 - natürlich zusammen mit dem Bügel 2, 2' - in Ablagestellung der Bügel 2, 2' an die Brillenfront 58 unter leichter Spannung der Feder 11 angelegt, so dass die Bügel 2, 2' in der Position bleiben. Figur 9b zeigt eine Schwenkung des Gelenkteils 5 um 45 Grad, Figur 9c eine solche um 90 Grad in die Sehstellung der Bügel 2, 2' der Brille. In dieser Stellung stehen die Kufen 14, 14' (Figur 5) des vorderen Gelenkteils 4 auf der Fläche 21 des hinteren Gelenkteils 5 auf und werden durch die Begrenzungswandungen Q-R und U-V der Fläche 21 geführt und damit die Bügel 2, 2' unter Anspannung der Feder 11 in Position der Sehstellung gehalten.

Den Vorgang des Abnehmens des Bügels 2, 2' von der Brillenfront 58 zeigen die Figuren 9d-g. Figur 9d zeigt eine weitere Schwenkung des hinteren Gelenkteils 5 in Richtung weg von der Symmetrieebene 40 der Brille 1. Die Höcker 16 der Kufen 14, 14' gleiten unter Anspannung der Feder 11 - die größte Spannung derselben im Bewegungsablauf - und damit des Kugelkopfankers 10 auf den Gegengleitflächen 9, 9' der Gegenplatte 6 weiter, bis der hintere Gelenkteil 5 resp. Bügel 2, 2' um 90 Grad in die Stellung der Figur 9e geschwenkt worden ist. Da das Durchgangsloch 20 des hinteren Gelenkteils 5 sowie der Kugelkopfsitz 17 des vorderen Gelenkteils 4 - wie vorbeschrieben - außermittig angeordnet sind, ist die Feder 11 nun spannungslos. Nunmehr kann der hintere Gelenkteil 5 resp. Bügel 2, 2' um 90 Grad um seine Längsachse 46, ohne Spannung der Feder 11, gedreht werden, was in Figur 9f gezeigt ist und - das zeigt Figur 9g - es kann der Bügel 2, 2' bzw. der Kugelkopfanker 10 von der Brillenfront 58 bzw. vom vorderen Gelenkteil 4 abgenommen werden.

In Ablagestellung der Brille 1 steht der Kugelkopfanker 10 unter Spannung, um eine Anlage der Bügel 2, 2' an die Brillenfront 58 zu gewährleisten. In der Sehstellung der Bügel 2, 2' steht der Kugelkopfanker 10 in Richtung der gemeinsamen Längsachse 46 der Gelenkteile 4, 5 unter einer erhöhten Spannung. Um von der Ablagestellung auf die Sehstellung zu schwenken muss ein Widerstand überwunden werden. Somit erhöht sich die Spannung während des Umklappens des Bügels, kehrt dann aber wieder zur ursprünglichen Spannung zurück, um die Sehstellung der Bügel 2, 2' aufrecht zu erhalten. Bei der weiteren Schwenkung des Bügels 2, 2' steigt die Spannung aufgrund des Überfahrens der Höcker 16, 16' erheblich an, um danach abzufallen; in den Stellungen der Figuren 9f + g und f' + g' ist der Kugelkopfanker 10 ohne Spannung, so dass der Bügel 2, 2' in leichter Weise gedreht und von der Brillenfront 58 abgenommen werden kann.

Die Figuren 10 a bis d zeigen eine Ansicht des Gelenks in der Sehstellung des Klappbügels 2, Figur 10b einen Schnitt längs der Linie H-H in Figur 10 a, wobei einerseits in Figur normalen, ausgeklappten Zustand a 10 c gezeigt ist, dass der Bügel und somit der hintere Gelenkteil zum Schutz desselben gegen ein zu starkes Verbiegen aus der Bügelebene heraus etwas nach oben gebogen bzw. verschoben werden und andererseits in Figur 10d der Bügel und somit der hintere Gelenkteil ebenfalls zum Schutz desselben gegen ein zu starkes Verbiegen aus der Bügelebene heraus etwas nach unten gebogen bzw. verschoben werden kann.

Es ist somit in den Figuren 10 a - d eine Ansicht und im Schnitt ein Gelenk gemäß Figur 2 in der Sehstellung des Bügels 2 gezeigt, wobei hier die Aussparung 13 innerhalb des vorderen Gelenkteils 4 in Richtung zum hinteren Gelenkteil 5 gerichtet flächig-V-förmig gestaltete Öffnungsflächen 28, 28', nach oben und nach unten geöffnet, aufweist, wodurch eine Schwenkbewegung der Bügel 2, 2', wenigstens in ihrer Sehstellung, nach oben oder nach unten, parallel zur Symmetrieebene 40 der Brille 1 und darüber hinaus, um den Mittelpunkt 47 des Kugelkopflagers 17 als Drehpunkt des Kugelkopf 23 des Kugelkopfankers 10 gegeben ist. Allerdings ist diese Schwenkbewegung in jeder Stellung der Brillenbügel machbar, weil die V-förmigen Flächen komplett um 180 Grad herumgezogen werden können.

Die Figuren 11 bis 16 zeigen vereinfachten Ausgestaltungen weitere Gelenke, welche nur ein Verschwenken der hinteren Gelenkteile resp. der Bügel um 90 Grad von der Ablage- in die Sehstellung der Brille zulassen und umgekehrt, jedoch können die Bügel in ihrer Sehstellung nach Drehung um 90 Grad um ihre Längsachse von der Brillenfront abgenommen werden, auf der vorgehenden Beschreibung wird Bezug genommen. Ein vorderer Gelenkteil 30 weist einen 90 Grad-Schlitz 31 auf, der somit in Richtung zur Symmetrieebene der Brille und hin zum Bügel in dessen Sehstellung geöffnet ist, siehe insbesondere Figuren 11a und 12a. Am Ende des Schlitzes 31 befindet sich ein Kugelkopfsitz 33 als das Ende einer Bohrung 32 (Figur 12a). Ein Kugelkopfanker 34 mit einem Achsabschnitt 35 unrunden Querschnitts und mit einem zweiseitig abgeplatteten Kugelkopf 45, eine Feder 36 sowie ein hinteres Gelenkteil 37 entsprechen den diesbezüglichen Teilen der Figur 4.

Die Figuren 14a - e zeigten das Einführen eines abgenommenen hinteren Gelenkteils 37 resp. Bügels in den vorderen Gelenkteil 30 resp. Brillenfront, wozu der Bügel - entweder in der Sehstellung oder in der Ablagestallung, aber um 90 Grad um seine Achse verdreht - dem vorderen Gelenkteil 30 resp. der Brillenfront angenähert, eingeführt und um 90 Grad um seine Achse gedreht wird.

Figur 15 zeigt eine vergrößerte Darstellung des vorderen Gelenkteils 30 des Gelenks der vereinfachten Ausführung mit Kugelkopfanker 34 gemäß der Figur 11. Insbesondere ist hier die Öffnung der Aussparung 31 dargestellt, die im Prinzip in Richtung der Normalen 54, 55 zweier aneinanderstoßender Seitenflächen des vorderen Gelenkteils 30 verläuft. Die Bohrung 32 mit ihrem am Ende befindlichen Kugelkopfsitz 33 verläuft parallel der Normalen 54 und senkrecht zur Normalen 55.

Figur 16 zeigt die Ausgestaltung eines weiteren vorderen Gelenkteils 30' mit einer Aussparung 31', die nach außen hin V-förmig verlaufende Öffnungsflächen 29, 29' aufweist, so dass auch hier die Bügel eine Bewegung nach oben oder unten parallel zur Symmetrieebene der Brille um einen kleinen Winkel zuzulassen imstande sind.

Zur Erzeugung der notwendigen Spannung zur Halterung der Bügel in der Sehstellung derselben gemäß den Figuren 11 bis 16 beim Heranführen des Bügels und Kontaktierung der beiden Gelenkteile ragt der Kugelkopf 45 des Kugelkopfankers 34 etwas über die Hälfte seines Durchmessers in den Kugelkopfsitz 33 hinein, der ja die Aussparung 31 hinterschneidet. Wenn nun der Bügel mitsamt dem verdrehsicher geführten Kugelkopfanker 34 in die Sehstellung um 90 Grad gedreht wird, wird während der Drehung aufgrund der Hinterschneidung der Kugelkopf 45 des Kugelkopfankers 34 unter Anwachsen der Feder-spannung der Feder 36 vollständig in den Kugelsitz 33 hineingezogen, bis der Mittelpunkt des Kugelkopfes 45 und der virtuelle Mittelpunkt des Kugelkopfsitzes 33 zusammenfallen.
Das erfindungsgemäße Gelenk kann natürlich auch für weitere Gelenkverbindungen in der Feinmechanik eingesetzt werden als nur für Brillen. Der Einsatz in der Brillentechnik ist jedoch Hauptzweck des Einsatzes; für einen solchen Einsatz ist das Gelenk beschrieben. Der besondere Vorteil der Erfindung besteht darin, dass die Bügel leicht und schnell ausgewechselt werden können, so dass verschiedene Bügelformen - wie Schmuckbügel - mit ein- und derselben Brillenfront und den damit vorgegebenen Gläsern verbunden werden können.

### Bezugszeichenliste

- 1: Brille
- 2: Bügel bzw. Klappbügel
- 2': Bügel bzw. Klappbügel
- 3: Frontbügelabschnitte
- 3': Frontbügelabschnitte
- 4: Vorderer Gelenkteil des Gelenks/Scharniers, der im Frontbügelabschnitt bzw. in der Brillenfront angeordnet ist,
- 5: Hinterer Gelenkteil des Gelenks/Scharniers, der im Bügel bzw. Klappbügel angeordnet ist
- 6: Gegenplatte des hinteren Gelenkteils 7
- 7: Platte vorderen Gelenkteils
- 8: Gleitflächen der Platte 7
- 8': Gleitflächen der Platte 7
- 9: Gleitflächen der Gegenplatte 6
- 9': Gleitflächen der Gegenplatte 6
- 10: Kugelkopfanker
- 11: Feder, wie Druck- oder Zugfeder
- 12: Abdeckhülse
- 13: Aussparung (180 Grad-Schlitz), welche durch die Platte und den Halsabschnitt des vorderen Gelenkteils geführt ist
- 14: Kufen des Bords 56
- 14': Kufen des Bords 56
- 15: Rundungen der Ränder 14, 14' der Platte 7, nach innen hin zur Symmetrieebene 40 der Brille 1 gerichtet
- 15': Rundungen der Ränder 14, 14' der Platte 7, nach innen hin zur Symmetrieebene 40 der Brille 1 gerichtet
- 16: Höcker am nach außen gerichteten Ende der Ränder 14, 14', weg von der Symmetrieebene 40 der Brille 1 gerichtet
- 16': Höcker am nach außen gerichteten Ende der Ränder 14, 14', weg von der Symmetrieebene 40 der Brille 1 gerichtet
- 17: Kugelkopfsitz bzw. Kugelkopflager
- 18: Loch
- 19: Endabschnitt des vorderen Gelenkteils
- 20: Führung in Form eines Durchgangslochs mit nichtrundem Querschnitt des hinteren Gelenkteils
- 21: Fläche Q-R-U-V des hinteren Gelenkteils
- 22: Achsenabschnitt der Kugelkopfachse mit ovalem Querschnitt
- 23: Kugelkopf der Kugelkopfachse
- 24: Abplattungen des Kugelkopfes
- 24': Abplattungen des Kugelkopfes
- 25: Aufnahmeabschnitt des hinteren Gelenkteils zum Aufschieben der Abdeckhülse
- 26: Achsenabschnitt der Kugelkopfachse mit rundem Querschnitt
- 27: Gegenhalter der Feder
- 28: Nach außen hin V-förmig verlaufende Flächen der schlitzförmigen Aussparung
- 28': Nach außen hin V-förmig verlaufende Flächen der schlitzförmigen Aussparung
- 29: Nach außen hin V-förmig verlaufende Flächen der schlitzförmigen Aussparung
- 29': Nach außen hin V-förmig verlaufende Flächen der schlitzförmigen Aussparung
- 30: Vorderer Gelenkteil des Gelenks/Scharniers, der im Frontbügelabschnitt bzw. in der Brillenfront angeordnet ist, hinterer Gelenkteil des Gelenks/Scharniers, der im Bügel bzw. Klappbügel angeordnet ist
- 31: 90 Grad-Schlitz bzw. 90 Grad-Aussparung
- 32: Bohrung
- 33: Kugelkopfsitz bzw. Kugelkopflager
- 34: Kugelkopfanker
- 35: Achsenabschnitt der Kugelkopfachse mit nichtrundem Querschnitt
- 36: Feder, wie Druck- oder Zugfeder
- 37: Hinterer Gelenkteil des Gelenks/Scharniers, der im Bügel bzw. Klappbügel angeordnet ist
- 38: Aufnahmebohrung für die Feder
- 39: Durchgangsloch mit nichtrundem Querschnitt
- 40: Symmetrie- oder Sagittalebene der Brille
- 41: Bügelebene der Brille, die zur Symmetrieebene senkrecht verläuft
- 42: -
- 43: Halsabschnitt des vorderen Gelenkteils
- 44: Anschlag
- 45: Kugelkopf der Kugelkopfachse
- 46: Gemeinsame Längs- oder Mittelachse der beiden Gelenkteile im Zustand der normalen Sehstellung der Brille
- 46': Außermittige Längsachse des Kugelkopfankers mitsamt dem vorderen Gelenkteil in Sehstellung der Bügel der Brille, bezogen auf die Längsachse 46 des Bügels
- 47: Mittelpunkt des Kugelkopflagers
- 48: Anschlag
- 49: Abplattungen des Kugelkopfes
- 50: Sich gegenüberstehende Seiten des vorderen Gelenkteils des Gelenks
- 51: Sich gegenüberstehende Seiten des vorderen Gelenkteils des Gelenks
- 52: Sich gegenüberstehende Seiten des vorderen Gelenkteils des Gelenks
- 53: Sich gegenüberstehende Seiten des vorderen Gelenkteils des Gelenks
- 54: Äste der Aussparung gerichtet im Prinzip in Richtung der Normalen der jeweiligen Seite
- 55: Äste der Aussparung gerichtet im Prinzip in Richtung der Normalen der jeweiligen Seite
- 56: Bord
- 57: Nasensitz der Brille
- 58: Brillenfront
- d: Durchmesser des Kugelkopflagers
- z: Durchmesser des Kugelkopfes im Bereich der sich gegenüberliegenden Abplattungen desselben
- Q-R: Begrenzungswandungen hin zu den Gegengleitflächen 9, 9'
- U-V: Begrenzungswandungen hin zu den Gegengleitflächen 9, 9'
- t>s: Nachweis, dass das Kugelkopflager 17, 33 innerhalb des vorderen Gelenkteils 4, 30, wie auch die Führung 20 des Kugelkopfankers 10, 34 innerhalb des hinteren Gelenkteils 5, 37 außermittig versetzt ist bezüglich der gemeinsamen Mittenachse 46
- q: Wahrer Durchmesser des Kugelkopfes, gemessen um 90 Grad versetzt zu den Abplattungen
- h: Geringste freie Höhe oder Durchlasshöhe der Aussparung

## Patentansprüche

1. Gelenk als Verbindungsteil zwischen einer Brillenfront (58) einer Brille (1) und ihren parallel zur Brillenfront (58) einklappbaren und ausklappbaren Bügeln (2,2') in die Ablage- oder die Sehstellung der Brille (1), bestehend aus einem vorderen Gelenkteil (4,30), der endständig an der Brillenfront (58) angeordnet ist und aus einem hinteren Gelenkteil (5,37), der an den Bügeln (2,'2') an deren vorderen Ende angeordnet ist, wobei im hinteren Gelenkteil (5,37) ein federbelasteter bzw. elastischer Kugelkopfanker (10,34) mit einem Kugelkopf (23,45) angeordnet ist, der in einem Kugelkopflager (17,33) des vorderen Gelenkteils (4,30) beweglich sitzt, das an seinem zum Bügel (2,2') weisenden Ende eine den vorderen Gelenkteil (4,30) sowie das Kugelkopflager (17,33) wenigstens teilweise durchsetzende, schlitzförmige Aussparung (13,31) aufweist, die sowohl in Richtung zur Symmetrieebene (40) der Brille (1) als auch in Richtung der Längsachse (46) des vorderen Gelenkteils (4,30) zum Bügel (2,2') hin geöffnet ist, um auf diese Weise ein Ein- und Ausklappen der Bügel (2,2') von der Ablage- in die Sehstellung der Brille (1) und umgekehrt zu ermöglichen, **dadurch gekennzeichnet,**
a) **dass** der Durchmesser (d) des Kugelkopflagers (17,33) des vorderen Gelenkteils (4,30), größer ist als die lichte Höhe (h) der Aussparung (13,31), so dass das Kugelkopflager (17,33) die Aussparung (13,31) hinterschneidet
b) **dass** der Kugelkopf (23,45) des Kugelkopfankers (10,34) zwei sich gegenüberliegende Abplattungen (24,24') mit einem gegebenen Abstand (z) voneinander aufweist, und die lichte Höhe (h) der Aussparung (13,31) an ihrem zur Brillenfront (58) hin gerichteten Ende größer als der Abstand (z) der Abplattungen (24,24') voneinander ist
c) **dass** der Kugelkopf (23,45) des Kugelkopfankers (10,34) nur mit seinen Abplattungen (24,24') die lichte Höhe (h) der Aussparung (13,31) zu passieren imstande ist, hingegen nur der volle Durchmesser (q) des Kugelkopfes (23,45) bei Drehung des Kugelkopfankers (10,34) um 90 Grad um seine Längsachse (46) in das Kugelkopflager (17,33) passend einzugreifen imstande ist, um dort passend zu sitzen, so dass nach Einführen des Kugelkopfes (23,45) mit dessen Abplattungen (24,24') in die Aussparung (13,31) die Bügel (2,2') relativ zur Brillenfront (58) um die Längsachse (46) des Kugelkopfankers (10,34) um wenigstens 90 Grad drehbar sind und dabei der Kugelkopf (23,45) desselben im Kugelkopflager (17,33), die Aussparung (13,31) hinterschneidend, zu liegen kommt und somit die Bügel (2,2') in umgekehrter Reihenfolge der Bewegung vom vorderen Gelenkteil (4,30) der Brillenfront (58) abnehmbar sind.

2. Gelenk nach Anspruch 1, **dadurch gekennzeichnet,**
**dass** sowohl das Kugelkopflager (17,33) als auch die Aussparung (13,31) beidseitig in Richtung zum hinteren Gelenkteil (5,37) um 180 Grad geöffnet sind, nämlich beginnend in Richtung zur Symmetrieebene (40) der Brille (1), danach in Richtung zum hinteren Gelenkteil (5,37), 90 Grad, und danach von der Symmetrieebene (40) der Brille (1) weg weisend, 180 Grad, um auf diese Weise ein Verschwenken der Bügel (2,2') um wenigstens 180 Grad zu ermöglichen, so dass nach Schwenken des jeweiligen Bügels (2,2') um 180 Grad und der Drehung desselben um 90 Grad um die Längsachse (46) des Kugelkopfankers (10,34) ein Herausnehmen oder Einführen desselben mitsamt des Kugelkopfes (23,45) aufgrund dessen Abplattungen (24,24') seitlich in das Kugelkopflager (17,33) heraus oder in dieses hinein gegeben ist.

3. Gelenk nach Anspruch 1 oder 2, **dadurch gekennzeichnet,**
**dass** der Kugelkopfanker (10,34) eigenelastisch verdrehsicher im hinteren Gelenkteil (5,37) gehaltert ist.

4. Gelenk nach Anspruch 3, **dadurch gekennzeichnet,**
**dass** zur Bewerkstelligung der Verdrehsicherheit des Kugelkopfankers (10,34) innerhalb des hinteren Gelenkteils (5,37) der Kugelkopfanker (10,34) einen Abschnitt (22) aufweist, welcher einen nichtrunden Querschnitt besitzt, und der Kugelkopfanker (10,34) mit diesem Abschnitt (22) in einer Führung (20), welche ein nichtrundes Loch (20) ist, passend beweglich gehaltert ist, welches Loch (20) das hintere Gelenkteil (5,37) wenigstens teilweise längs parallel zu dessen Längsachse (46') durchsetzt.

5. Gelenk nach einem der vorherigen Ansprüche, **dadurch gekennzeichnet, dass** beide Gelenkteile (4,5) an ihren einander zugewandten Enden eine durch die Aussparung (13,31) geteilte Platte (7) bzw. eine Gegenplatte (6) aufweisen, wobei die Platte (7) des vorderen Gelenkteils (4) auf jeder Seite der Aussparung (13,31) je eine Gleitfläche (8,8') und die Gegenplatte (6) des hinteren Gelenkteils (5,37) seitlich ebenfalls je eine Gegengleitfläche (9,9') besitzt und Gleitflächen (8,8') und Gegengleitflächen (9,9') in der Sehstellung der Bügel (2,2') der Brille (1) sich gegenüberstehend aufeinander aufliegen.

6. Gelenk nach Anspruch 5, **dadurch gekennzeichnet, dass** die Gleitflächen (8,8') der Platte (7) einen dieselbe überragenden Bord (56) aufweisen, welcher aus zwei sich gegenüberliegend verlaufenden Kufen (14,14') gebildet ist, welche zumindest teilweise um die Aussparung (13,31) herumlaufen und zumindest teilweise deren Rand ausbildet.

7. Gelenk nach Anspruch 6, **dadurch gekennzeichnet, dass** von den Gegengleitflächen (9,9') des hinteren Gelenkteils (5) mittig eine rechteckige Fläche (21) eingeschlossen ist, welche um die Höhe der Kufen (14,14') des Bords (56) gegenüber den Gegengleitflächen (9,9') der Platte (6) des hinteren Gelenkteils (4) tiefer gelegt ist, wodurch zwischen der Fläche (21) und den Gegengleitflächen (9,9') der Platte (6) Begrenzungswandungen (Q-R,U-V) hin zu den Gegengleitflächen (9,9') gebildet sind, die parallel zu den im Bereich der Gleitflächen (8,8') der Platte (7) verlaufenden Kufen (14,14') gerichtet sind.

8. Gelenk nach Anspruch 6 oder 7, **dadurch gekennzeichnet, dass** die Kufen (14,14') des Bords (56) an ihrem der Symmetrieebene (40) der Brille (1) abgewandten Ende je einen Höcker (16,16') aufweisen oder in einem Höcker (16,16') auslaufen.

9. Gelenk nach einem der vorherigen Ansprüche, **dadurch gekennzeichnet, dass** das Kugelkopflager (17,33) innerhalb des vorderen Gelenkteils (4,30), wie auch die Führung (20) des Kugelkopfankers (10,34) innerhalb des hinteren Gelenkteils (5,37) außermittig versetzt bezüglich der gemeinsamen Mittenachse (46) sind und zwar versetzt in Richtung weg von der Symmetrieebene (40) der Brille (1).

10. Gelenk nach Anspruch 4, **dadurch gekennzeichnet, dass** der die Verdrehsicherheit bewirkende Abschnitt (22) des Kugelkopfankers (10,34) direkt nach dem Kugelkopf (23,45) angeordnet ist und als größten Durchmesser vorzugsweise denjenigen Durchmesser (z) aufweist, den die sich gegenüberliegenden abgeplatteten Flächen (24,24') des Kugelkopfes (23) besitzen.

11. Gelenk nach einem der vorherigen Ansprüche, **dadurch gekennzeichnet, dass** die Aussparung (13,31) innerhalb des vorderen Gelenkteils (4,30) in Richtung zum hinteren Gelenkteil (5,37) gerichtet flächig-V-förmig nach oben und nach unten sich öffnende Flächen (28,28',29,29') aufweist, wodurch eine Schwenkbewegung der Bügel (2,2') in der Sehstellung der Brille (1), um den Kugelkopf (23,45) des Kugelkopfankers (10,34) innerhalb des Kugelkopflagers (17,33) als Drehpunkt, gegeben ist.

12. Gelenk nach Anspruch 3, **dadurch gekennzeichnet, dass** der Kugelkopfanker (10,34) federelastisch mittels einer Druck- oder Zugfeder (11,36), verdrehsicher im hinteren Gelenkteil (5,37) gehaltert ist.

13. Gelenk nach Anspruch 6, **dadurch gekennzeichnet, dass** der Bord (56) aus zwei sich gegenüberliegend verlaufen¬den wenigstens teilweise parallelen Kufen (14,14') gebildet ist.

## Claims

1. Hinge as connecting part between a frame front (58) of a pair of eyeglasses (1) and its temples (2, 2') enabled to be folded and unfolded parallel to the frame front (58) into the storage or the vision position of the eyeglasses (1), comprised of a front hinge part (4, 30), disposed in the terminal position on the frame front (58), and of a back hinge part (5, 37), disposed on the temples (2,2') at their front end, wherein in the back hinge part (5, 37) a spring-loaded or resilient spherical head anchor (10, 34) with a spherical head (23, 45) is disposed which is movably seated in a spherical head bearing (17, 33) of the front hinge part (4, 30), which at its end directed toward the temple (2, 2') comprises a slot-like recess (13, 31) at least partially penetrating the front hinge part (4, 30) as well as the spherical head bearing (17, 33), which recess is open in the direction toward the plane of symmetry (40) of the eyeglasses (1) as well as also in the direction of the longitudinal axis (46) of the front hinge part (4, 30) toward the temple (2, 2') in order to enable in this manner the folding and unfolding of the temples (2, 2') from the storage into the vision position of the eyeglasses (1) and conversely, **characterized in**
a) **that** the diameter (d) of the spherical head bearing (17, 33) of the front hinge part (4, 30) is greater than the clear height (h) of the recess (13, 31) such that the spherical head bearing (17, 33) undercuts the recess (13, 31),
b) t**hat** the spherical head (23, 45) of the spherical head anchor (10, 34) comprises two opposingly placed flattenings (24, 24') at a given spacing (z) from one another and the clear height (h) of the recess (13, 31) at its end directed toward the frame front (58) is greater than the spacing (z) of the flattenings (24, 24') from one another,
c) **that** the spherical head (23, 45) of the spherical head anchor (10, 34) is only enabled to pass with its flattenings (24, 24') the clear height (h) of the recess (13, 31), whereas the full diameter (q) of the spherical head (23, 45) is only enabled with the rotation of the spherical head anchor (10, 34) by 90 degrees about its longitudinal axis (46) to engage fittingly into the spherical head bearing (17, 33) in order to be seated fittingly in it such that, after the introduction of the spherical head (23, 45) with its flattenings (24, 24') into the recess (13, 31), the temples (2, 2') are rotatable relative to the frame front (58) by at least 90 degrees about the longitudinal axis (46) of the spherical head anchor (10, 34) and herein the spherical head (23, 45) of the same comes to lie in the spherical head bearing (17, 33) such that it undercuts the recess (13, 31) and thus the temples (2, 2') can be removed from the front hinge part (4, 30) of the frame front (58) in the reverse sequence of the motion.

2. Hinge as in claim 1, **characterized in that** the spherical head bearing (17, 33) as well as also the recess (13, 31) are open by 180 degrees on both sides in the direction toward the rear hinge part (5, 37), namely starting in the direction toward the plane of symmetry (40) of the eyeglasses (1), subsequently in the direction toward the rear hinge part (5, 37) by 90 degrees and then, directed away from the plane of symmetry (40) of the eyeglasses (1), by 180 degrees in order to enable in this manner the swivelling of the temples (2, 2') by at least 180 degrees such that, after swivelling the particular temple (2, 2') by 180 degrees and the rotation of same by 90 degree about the longitudinal axis (46) of the spherical head anchor (10, 34), the removal or insertion of same together with the spherical head (23, 45), due to its flattenings (24, 24'), laterally into the spherical head bearing (17, 33) from or into the same is enabled.

3. Hinge as in claim 1 or 2, **characterized in that** the spherical head anchor (10, 34) is retained intrinsically elastically in the rear hinge part (5, 37) such that it is free of risk of torsion.

4. Hinge as in claim 3, **characterized in that** to establish the resistance to torsion of the spherical head anchor (10, 34) within the rear hinge part (5, 37), the spherical head anchor (10, 34) comprises a section (22) with a non-round cross section and the spherical head anchor (10, 34) with this section (22) is fittingly and movably retained in a guide (20) which is a non-round hole (20), which hole (20) at least partially penetrates the rear hinge part (5, 37) longitudinally parallel to its longitudinal axis (46').

5. Hinge as in one of the preceding claims, **characterized in that** both hinge parts (4, 5) comprise at their ends facing one another a plate (7) or a counterplate (6) divided by the recess (13, 31), wherein the plate (7) of the front hinge part (4) comprises on each side of the recess (13, 31) one slide face (8, 8') and the counterplate (6) of the rear hinge part (5, 37) also comprises laterally one counterslide face (9, 9') each and slide faces (8, 8') and counterslide faces (9, 9') are opposingly in contact on one another in the vision position of the temples (2, 2') of the eyeglasses (1).

6. Hinge as in claim 5, **characterized in that** the slide faces (8, 8') of the plate (7) comprise a rim (56) projecting beyond the same, which is formed of two oppositely extending runners (14, 14'), which, at least partially, extend about the recess (13, 31) and form at least partially its edge.

7. Hinge as in claim 6, **characterized in that** the counterslide faces (9, 9') of the rear hinge part (5) encompass centrally a rectangular area (21) which, relative to the counterslide faces (9, 9') of the plate (6) of the rear hinge part (4), is located lower by the height of the runners (14, 14') of the rim (56), whereby between the area (21) and the counterslide faces (9, 9') of the plate (6) delimitation walls (Q-R, U-V) are formed toward the counterslide faces (9, 9'), which delimitation walls (Q-R, U-V) are directed parallel to the runners (14, 14') that extend in the proximity of the slide faces (8, 8') of plate (7).

8. Hinge as in claim 6 or 7, **characterized in that** at its end facing away from the plane of symmetry (40) of the eyeglasses (1) the runners (14, 14') of the rim (56) comprise each a protuberance (16, 16') or terminate in a protuberance (16, 16').

9. Hinge as in one of the preceding claims, **characterized in that** the spherical head bearing (17, 33) within the front hinge part (4, 30) as well as also the guide (20) of the spherical head anchor (10, 34) within the rear hinge part (5, 37) are eccentrically offset with respect to the common center axis (46) and are specifically offset in the direction away from the plane of symmetry (40) of the eyeglasses (1).

10. Hinge as in claim 4, **characterized in that** the section (22), effecting the resistance to torsion, of the spherical head anchor (10, 34), is disposed immediately after the spherical head (23, 45) and has as its greatest diameter preferably the diameter (z) of the opposingly disposed flattened faces [sic: flattenings] (24, 24') of the spherical head (23).

11. Hinge as in one of the preceding claims, **characterized in that** the recess (13, 31) within the front hinge part (4, 30) comprises faces (28, 28', 29, 29') that, with their V-shaped areas directed toward the rear hinge part (5, 37), open upwardly and downwardly, whereby a swivel movement of the temples (2, 2') in the vision position of the eyeglasses (1) about the spherical head (23, 45) of the spherical head anchor (10, 34) within the spherical head bearing (17, 33) as the pivot point is given.

12. Hinge as in claim 3, **characterized in that** the spherical head anchor (10, 34) is retained spring-resilientantly by means of a pressure or compression spring (11, 36) in the rear hinge part (5, 37) such that it is resistant to torsion.

13. Hinge as in claim 6, **characterized in that** the rim (56) is formed of two opposite runners (14, 14') extending at least partially in parallel.

## Revendications

1. Articulation servant d'élément de liaison entre une partie avant de lunettes (58) d'une paire de lunettes (1) et ses branches (2, 2') pouvant être repliées et dépliées parallèlement à la partie avant de lunettes (58) dans la position de rangement ou d'utilisation de la paire de lunettes (1), constituée d'un élément d'articulation avant (4, 30) qui est disposé par son extrémité sur la partie avant de lunettes (58) et d'un élément d'articulation arrière (5, 37) qui est disposé au niveau de son extrémité avant contre les branches (2, 2'), un ancrage à tête sphérique élastique ou sollicité par ressort (10, 34) avec une tête sphérique (23, 45), qui est logée de manière mobile dans un palier de tête sphérique (17, 33) de l'élément d'articulation avant (4, 30), étant disposé dans l'élément d'articulation arrière (5, 37), lequel présente, au niveau de son extrémité tournée vers la branche (2, 2'), un évidement en forme de fente (13, 31) traversant au moins en partie l'élément d'articulation avant (4, 30) ainsi que le palier de tête sphérique (17, 33), lequel est ouvert à la fois dans la direction du plan de symétrie (40) de la paire de lunettes (1) et dans la direction de l'axe longitudinal (46) de l'élément d'articulation avant (4, 30) vers la branche (2, 2') afin de permettre de cette manière un dépliement et un repliement des branches (2, 2') de la position de rangement dans la position d'utilisation de la paire de lunettes (1) et inversement, **caractérisée en ce que**
a) le diamètre (d) du palier de tête sphérique (17, 33) de l'élément d'articulation avant (4, 30) est supérieur à la hauteur intérieure (h) de l'évidement (13, 31) de telle sorte que le palier de tête sphérique (17, 33) coupe par l'arrière l'évidement (13, 31),
b) la tête sphérique (23, 45) de l'ancrage de tête sphérique (10, 34) présente deux méplats opposés (24, 24') espacés d'une distance définie (z) l'un de l'autre et la hauteur intérieure (h) de l'évidement (13, 31) au niveau de son extrémité orientée vers la partie avant de lunettes (58) est supérieure à la distance (z) entre les méplats (24, 24'),
c) la tête sphérique (23, 45) de l'ancrage de tête sphérique (10, 34) est en mesure de passer au-delà de la hauteur intérieure (h) de l'évidement (13, 31) seulement avec ses méplats (24, 24'), par contre, seul le diamètre complet (q) de la tête sphérique (23, 45) est en mesure de s'engager avec ajustement dans le palier de tête sphérique (17, 33) lors de la rotation de l'ancrage de tête sphérique (10, 34) de 90 degrés autour de son axe longitudinal (46), afin d'y reposer de manière ajustée de telle sorte qu'après l'introduction de la tête sphérique (23, 45) avec ses méplats (24, 24') dans l'évidement (13, 31), les branches (2, 2') puissent tourner par rapport à la partie avant de lunettes (58) autour de l'axe longitudinal (46) de l'ancrage de tête sphérique (10, 34) d'au moins 90 degrés et que la tête sphérique (23, 45) de celui-ci puisse ainsi venir se placer, en coupant l'évidement (13, 31) par l'arrière, dans le palier de tête sphérique (17, 33) et que les branches (2, 2') puissent ainsi être retirées dans la séquence inverse de déplacement depuis l'élément d'articulation avant (4, 30) de la partie avant de lunettes (58).

2. Articulation selon la revendication 1, **caractérisée en ce que** le palier de tête sphérique (17, 33) ainsi que l'évidement (13, 31) sont ouverts des deux côtés de 180 degrés dans la direction de l'élément d'articulation arrière (5, 37), c'est-à-dire en commençant dans la direction du plan de symétrie (40) de la paire de lunettes (1), puis de 90 degrés dans la direction de l'élément d'articulation arrière (5, 37), puis de 180 degrés à l'opposé du plan de symétrie (40) de la paire de lunettes (1), afin de permettre ainsi un pivotement des branches (2, 2') d'au moins 180 degrés de telle sorte qu'après le pivotement de la branche respective (2, 2') de 180 degrés et la rotation de celle-ci de 90 degrés autour de l'axe longitudinal (46) de l'ancrage de tête sphérique (10, 34), celle-ci puisse être retirée ou introduite conjointement avec la tête sphérique (23, 45) du fait de ses méplats (24, 24') latéralement hors ou dans le palier de tête sphérique (17, 33).

3. Articulation selon la revendication 1 ou 2, **caractérisée en ce que** l'ancrage de tête sphérique (10, 34) est retenu avec sa propre élasticité de manière non rotative dans l'élément d'articulation arrière (5, 37).

4. Articulation selon la revendication 3, **caractérisée en ce que** pour assurer l'immobilisation en rotation de l'ancrage de tête sphérique (10, 34) à l'intérieur de l'élément d'articulation arrière (5, 37), l'ancrage de tête sphérique (10, 34) présente une portion (22) qui présente une section transversale non ronde, et l'ancrage de tête sphérique (10, 34) est retenu de manière mobile de manière à s'ajuster avec cette portion (22) dans un guide (20) qui est un trou non rond (20), lequel trou (20) traverse l'élément d'articulation arrière (5, 37) au moins en partie longitudinalement, parallèlement à son axe longitudinal (46').

5. Articulation selon l'une quelconque des revendications précédentes, **caractérisée en ce que** les deux éléments d'articulation (4, 5) présentent, au niveau de leurs extrémités tournées l'une vers l'autre, une plaque (7), ou une plaque conjuguée (6), divisée par l'évidement (13, 31), la plaque (7) de l'élément d'articulation avant (4) présentant de chaque côté de l'évidement (13, 31) à chaque fois une surface de glissement (8, 8') et la plaque conjuguée (6) de l'élément d'articulation arrière (5, 37) présentant latéralement également à chaque fois une surface de glissement conjuguée (9, 9') et les surfaces de glissement (8, 8') et les surfaces de glissement conjuguées (9, 9'), dans la position d'utilisation des branches (2, 2') de la paire de lunettes (1), reposant l'une au-dessus de l'autre en regard l'une de l'autre.

6. Articulation selon la revendication 5, **caractérisée en ce que** les surfaces de glissement (8, 8') de la plaque (7) présentent un bord (56) faisant saillie au-delà de celles-ci, qui est formé de deux patins (14, 14') s'étendant en regard l'un de l'autre, qui s'étendent au moins en partie autour de l'évidement (13, 31) et en constituent au moins en partie la bordure.

7. Articulation selon la revendication 6, **caractérisée en ce qu**'une surface rectangulaire (21) est englobée centralement par les surfaces de glissement conjuguées (9, 9') de l'élément d'articulation arrière (5), laquelle est placée plus bas par rapport aux surfaces de glissement conjuguées (9, 9') de la plaque (6) de l'élément d'articulation arrière (4) dans la mesure de la hauteur des patins (14, 14') du bord (56), de sorte qu'entre la surface (21) et les surfaces de glissement conjuguées (9, 9') de la plaque (6), des parois de limitation (Q-R, U-V) soient formées vers les surfaces de glissement conjuguées (9, 9'), lesquelles sont orientées parallèlement aux patins (14, 14') s'étendant dans la région des surfaces de glissement (8, 8') de la plaque (7).

8. Articulation selon la revendication 6 ou 7, **caractérisée en ce que** les patins (14, 14') du bord (56) présentent, au niveau de leur extrémité opposée au plan de symétrie (40) de la paire de lunettes (1), à chaque fois un bossage (16, 16') ou se terminent par un bossage (16, 16').

9. Articulation selon l'une quelconque des revendications précédentes, **caractérisée en ce que** le palier de tête sphérique (17, 33) à l'intérieur de l'élément d'articulation avant (4, 30) ainsi que le guide (20) de l'ancrage de tête sphérique (10, 34) à l'intérieur de l'élément d'articulation arrière (5, 37) sont décalés de manière décentrée par rapport à l'axe médian commun (46), à savoir sont décalés dans la direction s'éloignant du plan de symétrie (40) de la paire de lunettes (1).

10. Articulation selon la revendication 4, **caractérisée en ce que** la portion (22) de l'ancrage de tête sphérique (10, 34) causant l'immobilisation en rotation est disposée directement après la tête sphérique (23, 45) et présente en tant que diamètre maximal de préférence le diamètre (z) des surfaces aplaties opposées (24, 24') de la tête sphérique (23).

11. Articulation selon l'une quelconque des revendications précédentes, **caractérisée en ce que** l'évidement (13, 31) à l'intérieur de l'élément d'articulation avant (4, 30) présente des surfaces (28, 28', 29, 29') s'ouvrant vers le haut et vers le bas en forme de V aplati orientées dans la direction de l'élément d'articulation arrière (5, 37), de sorte qu'un mouvement de pivotement des branches (2, 2'), dans la position d'utilisation de la paire de lunettes (1), autour de la tête sphérique (23, 45) de l'ancrage de tête sphérique (10, 34) à l'intérieur du palier de tête sphérique (17, 33) en tant que centre de rotation soit possible.

12. Articulation selon la revendication 3, **caractérisée en ce que** l'ancrage de tête sphérique (10, 34) est retenu de manière élastique à ressort et non rotative dans l'élément d'articulation arrière (5, 37) au moyen d'un ressort de compression ou de traction (11, 36).

13. Articulation selon la revendication 6, **caractérisée en ce que** le bord (56) est formé de deux patins (14, 14') s'étendant en regard l'un de l'autre et au moins partiellement parallèles.
